# EUROPEAN PATENT SPECIFICATION

(11) **EP 2 033 549 B1**
(45) Date of publication and mention of the grant of the patent: **04.08.2010**
(21) Application number: 07116057.6
(22) Date of filing: 10.09.2007
(51) Int. Cl.: A47J 27/212

(54) **A tea machine or an urn with improved illuminative means indicative of the mode of operation thereof**
Teemaschine oder Urne mit verbesserten Leuchtmitteln zur Betriebszustandsanzeige
Machine à thé ou urne avec supports d'illumination améliorés indiquant le mode de fonctionnement correspondant

(43) Date of publication of application: 11.03.2009
(73) Proprietor: Eksen Makine Sanayi ve Ticaret A.S., 41480 Kocaeli (TR)
(72) Inventor: Tahincioglu Semih EKSEN Makine Sanayi ve Ticaret A.S., 41480, Istanbul (TR)
(74) Representative: Sevinç, Erkan

(56) References cited:
- WO-A-02/00072
- GB-A- 2 423 463
- GB-A- 2 430 138

## Description

### Technical Field of the Invention

The present invention relates to a tea preparing apparatus and more particularly to such an apparatus having illuminated indication means to improve visibility of the operation mode of the apparatus.

### Background of the Invention

Tea is traditionally consumed on a daily basis in large quantities in the country of the applicant. A good flavor tea is believed to be prepared by way of boiling water in a first receptacle and steeping tea leaves in hot water in a second receptacle.

Use of electrical teapots from when they first emerged in the market, is still limited due to the common mistrust that a good flavor tea is believed to be obtained only by way of observing a set of parameters such as amount of tea plant used, material of the brewer and/or boiler, duration of brewing cycle and adequate flavor that can be extracted from tea leaves. Therefore, tea preparing is almost believed to be a personal ability of some "qualified" people and therefore reluctance to full mechanization is maintained.

Various mechanized products with improved user control options are introduced to the market to overcome concerns of the above kind. To this end, an electrical tea machine having improved means indicative of the different operative states of the machine is a step forward to enable user intervention at any step of the preparation process, such as boiling and/or brewing control.

The present invention proposes a tea machine with improved indication means to the extent to be visible from a relatively distant location, or more specifically to be clearly seen from any indoor location. Prior art also touches the visibility problem. EP 1 518 483 provides a system in which direct transmission of light from the light source into the liquid is allowed. WO 03/020096 provides a domestic appliance having a fluid chamber which is provided with a light to diffuse through the fluid and is visible through a transparent/translucent wall portion. GB 2 312 153 discloses an electrical appliance having light-emitting means through an optical conductor plate. The present invention, on the other hand, provides an improved illumination effect to the extent that the illuminated fluid itself produces a light source effect.

To this end, the present invention provides an indication means in the form of visible light so as to illuminate boiling water receptacle. Boiling receptacle comprising water is illuminated in its entirety to the extent to be visible from distant locations due to a large number of rays refracted towards many different directions through water. The water receptacle is equipped with a special medium in a manner to refract light rays from the light source in a plurality of directions, resulting in a unique visual indication. Further, said medium is designed to focus light rays from said light source onto the water receptacle.

### Objects of the Invention

Primary object of the present invention is to provide a tea machine or an urn capable of indicating its mode of operation to a user in relatively distant proximity.

Another object of the present invention is to provide a tea machine or an urn having means for illuminating a receptacle thereof in its entirety.

Another object of the present invention is to provide a tea machine or an urn having a receptacle in which the illuminated fluid itself produces a light source effect.

### Summary of the Invention

The present invention proposes a domestic appliance and specifically a tea machine having an indication means in the form of visible light so as to illuminate boiling water receptacle. Boiling receptacle comprising water is illuminated in its entirety to the extent to be visible from distant locations due to a large number of light rays refracted in different directions within water. The water receptacle is equipped with a special medium in a manner to refract light rays from the light source in a plurality of directions, resulting in a unique visual indication. Further, said medium is designed to focus light rays from said light source onto the water receptacle.

### Brief Description of the Figures

Accompanying drawings are given solely for the purpose of exemplifying a tea machine having improved means indicative of mode of operation thereof, whose advantages over prior art were outlined above and will be explained in detail hereinafter:

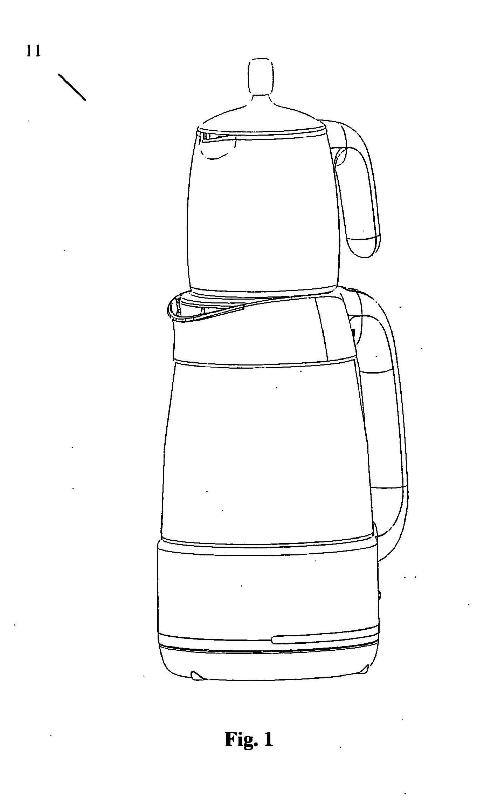

Fig. 1 demonstrates an electrical tea machine having a first and a second receptacle.
Fig. 2 demonstrates an electrical tea machine with a first light source in the lower receptacle.

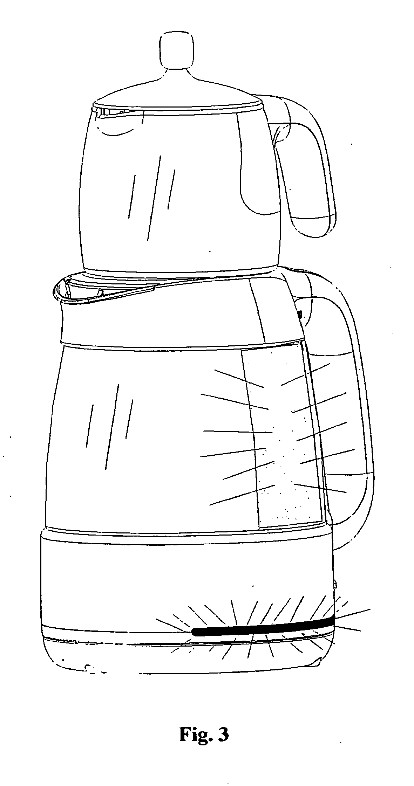

Fig. 3 demonstrates an electrical tea machine with a second light source in the lower receptacle.
Fig. 4a demonstrates a lower receptacle portion with said second light source is on.
Fig. 4b demonstrates a lower receptacle portion with said first light source is on.
Fig. 5 demonstrates a transversal cross-section view of the refractive medium according to the present invention.

### Detailed Description of the Invention

Referring now to the figures outlined above, the present invention proposes an electrical household appliance (11) for preparing tea in a traditional manner, i.e. by way of using separate boiling and brewing receptacles. The appliance comprises a first receptacle (12) for boiling water prior to brewing and a second receptacle (13) in which tea leaves are placed.

Both receptacles (12, 13) are put one above another to allow thermal communication and heat energy radiated from a heat source in communication with said first receptacle (12) also brews tea leaves in said second receptacle (13). As is generally practiced in the available art, effective power consumption by said heat source is lowered during brewing. Temperature in the lower receptacle (12) may be controlled by means of a plurality of control arrangements and sensors; that is while temperature in the lower receptacle may be kept in a near-boiling temperature, different control schemes to allow continuous or discontinuous powering of the heat source can be applied.

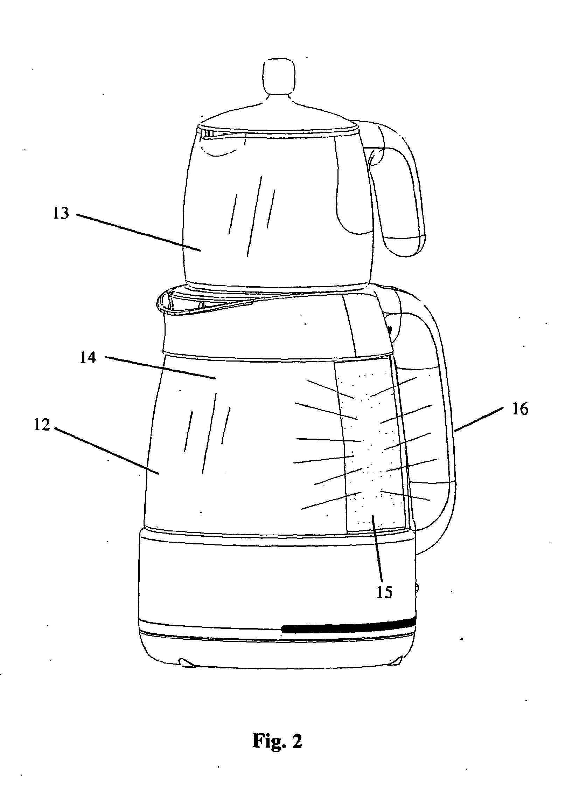

Referring now to Fig. 2, the lower receptacle (12) according to the present invention comprises a handle (16) and a transparent peripheral wall (14). Said transparent peripheral wall (14) is preferably made of glass or any heat endurable polymeric material, generally translucent material. Said wall (14) is intermitted by a longitudinal refractive medium (15) covering a longitudinal surface portion of said wall (14) extending vertically in front of said handle (16). Said refractive medium (15) extending immediately in front of the longitudinal axis of said handle (16) is advantageous in that said refractive medium (15) do not form a barrier in terms of peripheral visibility of said receptacle (12).

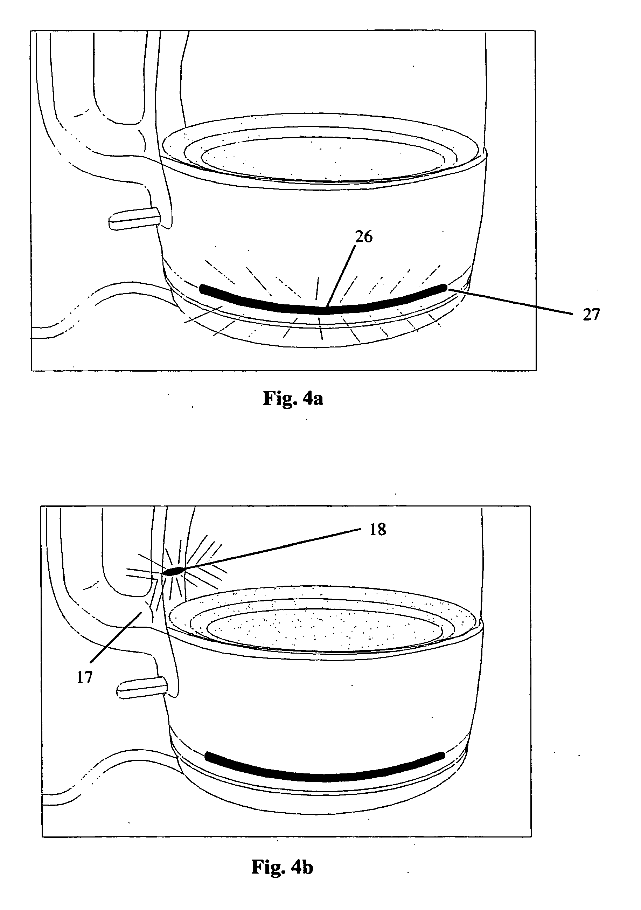

A first light source (18) is embedded within a lower portion (17) of said handle (16) so as to be fully screened by said refractory medium (15, not seen in Fig. 4b) on any direction lying within said first receptacle (12). The refractive medium (15) according to the present invention is a concave body having small protuberances on its outer side, i.e. the side facing said first light source (18). The refractive medium (15) therefore does not allow direct transmission of light into the first receptacle (12) but refracts light rays from said light source (18) in a great many directions within said first receptacle (12). The term small protuberances refer to the shaggy (rough, uneven) surface of refractive medium (15).

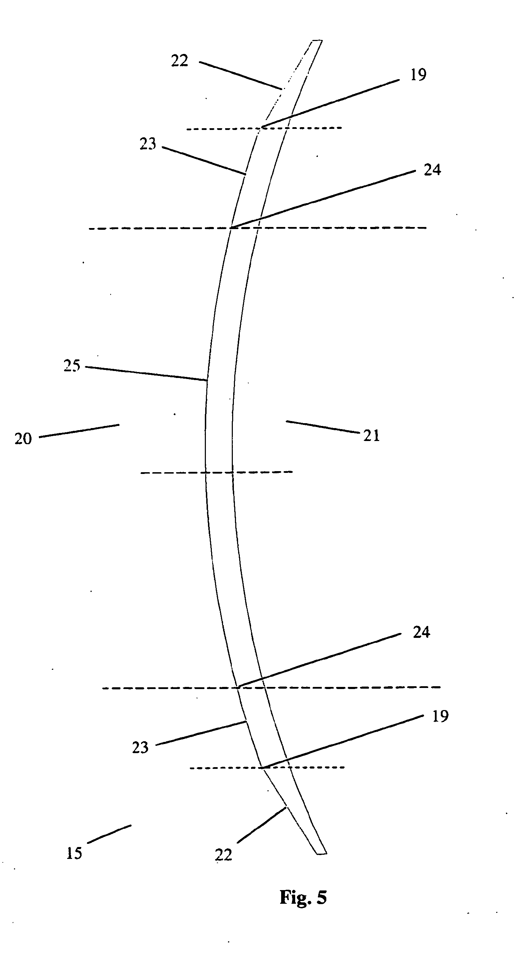

The refractive medium (15) having a concave outer face in respect of said light source (18) also has a focusing function in the sense that light rays emitted from said light source (18) are focused and maintained within the receptacle (12). Referring now to Fig. 5, said refractive medium (15) has a smooth inner surface (21) being adjacent to a wall (14) portion of said receptacle (12) and an outer surface (20).

Said outer surface (20) is divided into three groups of surfaces, all with different surface characteristics. Each surface pertaining to a specific group is in the form of a longitudinal strip. The first surface group constitutes the outermost surface portions (22) separated from the intermediary surface portions (23) by first breaking points (19). The intermediary surface portions (23) are separated from the refractive surface portion (25) by second breaking points (24). The refractive surface portion (25) is provided in its entirety with protuberances to refract light rays received from the light source (18) in a large number of different directions within the receptacle (12). The intermediary surface portions (23) are not provided with small protuberances but are less reflective compared to the outermost surface portions (22), therefore not reflecting light rays back but permeate contrary to the outermost surface portions (22) being more reflective.

Said light source (18) is symmetrically positioned with a slight distance in front of the outer face (20) of said refractive medium (15). Due to the fact that said refractive medium (15) has a concave outer face (20), fulfills a focusing function in the manner that light rays received on the intermediary (23) and outermost (22) surface portions are focused onto the receptacle (12).

The present invention further features a second light source (26) on the bottom part of said first receptacle (12). Said second light source (26) is designed to be situated behind a partially peripheral translucent screen (27) in a manner to illuminate both said translucent screen (27) and that direct transmission of light from the light source (26) into the liquid is allowed. Said second light source (26) may function to indicate a second mode of operation; for instance, the first light source may be assigned to operate during the brewing mode and the second lights source (26) during the boiling mode. The light-emitting means (18, 26) according to present invention are preferably light-emitting diodes (LED).

In summary, the present invention operates in a conventional manner to provide boiling in a first receptacle (12) and steeping in a second receptacle (13). Improved indication means therefore allow users for a quicker intervention, for instance in order for extending boiling and/or brewing periods. A conventional user control panel may be provided to let a user perform different functions such as "continue boiling" or "discontinue brewing". As already mentioned, different boiling and brewing control schemes can be applied according to the present invention. As the control circuitry for applying the basic principle underling the present invention, that is, electrical circuit for selectively powering light-emitting means and heat source according to feedback signals from respective sensors is widely practiced in the art, needs not be further mentioned herein.

The illuminating arrangement according to the present invention therefore provides an improved visibility to the extent that operative state of the tea machine can easily be observed as the water receptacle itself becomes illuminated in its entirety

## Claims

1. An electrical household appliance, and more particularly a tea preparing apparatus like a tea machine or an urn, comprising at least one receptacle (12) for receiving a liquid, said receptacle (12) having a transparent peripheral wall (14) and a handle (16) within a lower portion (17) of which a light source (18) for illuminating said receptacle (12) is embedded wherein a refractive medium (15) on a surface portion of said wall (14) is positioned between said light source (18) and said transparent peripheral wall (14) and wherein at least a surface portion (25) of said refractive medium (15) is provided with protuberances that refract light rays in various directions.

2. An electrical household appliance as in Claim 1 wherein said surface portion (25) of said refractive medium (15) is provided on the outer side (20) thereof.

3. An electrical household appliance as in Claim 2 wherein said refractive medium (15) is a concave body in respect of said light source (18).

4. An electrical household appliance as in any preceding claims wherein said surface portion (25) of said refractive medium (15) is symmetrically enclosed at both sides by two longitudinal strips (22, 23), the outermost longitudinal strips (22) being more reflective compared to intermediary longitudinal strips (23) being adjacent to said refractive surface portion (25).

5. An electrical household appliance as in Claim 4 wherein said refractive medium (15) has a smooth inner surface (21) being adjacent to said wall (14).

6. An electrical household appliance as in Claim 5 wherein said light source (18) is fully screened by said refractive medium (15) on directions lying within said receptacle (12).

7. An electrical household appliance as in Claim 6 wherein said refractive medium (15) extend longitudinally so as to vertically cover a transparent wall (14) portion immediately in front of the longitudinal axis of said handle (16).

8. An electrical household appliance as in any preceding claims wherein said transparent peripheral wall (14) is preferably made of glass or an heat endurable polymeric material.

9. An electrical household appliance as in any preceding claims wherein a second light source (26) on a bottom part of said first receptacle (12) being situated behind a partially peripheral translucent screen (27) is provided.

10. An electrical household appliance as in any preceding claims wherein said receptacle is adapted to receive at least a second receptacle (13) from above in order for brewing infusion plant leaves therein.

## Patentansprüche

1. Elektrisches Haushaltsgerät, insbesondere Teezubereitungsgerät wie eine Teemaschine oder ein Kessel, das zumindest einen Aufnahmebehälter (12) zur Aufnahme einer Flüssigkeit umfasst, wobei der Aufnahmebehälter (12) eine transparente Umfangswand (14) und einen Griff (16) aufweist, in dessen unterem Abschnitt (17) eine Lichtquelle (18) zur Beleuchtung des Aufnahmebehälters (12) eingelassen ist, wobei ein Brechungsmittel (15) auf einem Oberflächenabschnitt der Wand (14) angeordnet ist, und wobei mindestens ein Oberflächenabschnitt (25) des Brechungsmittels (15) mit Ausstülpungen versehen ist, die Lichtstrahlen in verschiedene Richtungen brechen.

2. Elektrisches Haushaltsgerät gemäß Anspruch 1, wobei der Oberflächenabschnitt (25) des Brechungsmittels (15) auf dessen Außenseite (20) angeordnet ist.

3. Elektrisches Haushaltsgerät gemäß Anspruch 2, wobei das Brechungsmittel (15) ein konkaver Körper in Bezug auf die Lichtquelle (18) ist.

4. Elektrisches Haushaltsgerät gemäß einem der vorhergehenden Ansprüche, wobei der Oberflächenabschnitt (25) des Brechungsmittels (15) an beiden Seiten von zwei länglichen Streifen (22, 23) symmetrisch umschlossen ist, wobei die äußeren länglichen Streifen (22) reflektierender sind im Vergleich zu den dazwischenliegenden länglichen Streifen (23), die an den Brechungsoberflächenabschnitt (25) angrenzen.

5. Elektrisches Haushaltsgerät gemäß Anspruch 4, wobei das Brechungsmittel (15) eine glatte innere Oberfläche (21) aufweist, die an die Wand (14) angrenzt.

6. Elektrisches Haushaltsgerät gemäß Anspruch 5, wobei die Lichtquelle (18) vollständig von dem Brechungsmittel (15) in Richtungen abgeschirmt ist, die in dem Aufnahmebehälter (12) liegen.

7. Elektrisches Haushaltsgerät gemäß Anspruch 6, wobei sich das Brechungsmittel (15) derart längs erstreckt, dass es einen transparenten Wandabschnitt (14) unmittelbar vor der Längsachse des Griffs (16) abdeckt.

8. Elektrisches Haushaltsgerät gemäß einem der vorhergehenden Ansprüche, wobei die transparente Umfangswand (14) vorzugsweise aus Glas oder einem hitzebeständigen Polymermaterial gefertigt ist.

9. Elektrisches Haushaltsgerät gemäß einem der vorhergehenden Ansprüche, wobei auf einem Bodenabschnitt des ersten Aufnahmebehälters (12) eine zweite Lichtquelle (26) vorgesehen ist, die hinter einem teilweise umfänglichen durchscheinenden Schirm angeordnet ist.

10. Elektrisches Haushaltsgerät gemäß einem der vorhergehenden Ansprüche, wobei der Aufnahmebehälter ausgebildet ist, um darüber mindestens einen zweiten Aufnahmebehälter (13) aufzunehmen, um darin Aufgusspflanzenblätter zu brühen.

## Revendications

1. Appareil électrique domestique, et plus particulièrement un appareil pour faire du thé tel qu'une machine à thé ou une machine de distribution de liquides, comprenant au moins un récipient (12) pour recevoir un liquide, ledit récipient (12) présentant une paroi périphérique transparente (14) et une anse (16) dans une partie inférieure de laquelle est logée une source lumineuse (18) pour illuminer ledit récipient (12), dans lequel un milieu réfractif (15) sur une partie de surface de ladite paroi (14) est positionné entre ladite source lumineuse (18) et ladite paroi périphérique transparente (14) et dans lequel au moins une partie de surface (25) dudit milieu réfractif (15) est munie de saillies diffusant par réfraction des rayons lumineux selon différentes directions.

2. Appareil électrique domestique selon la revendication un 1, dans lequel ladite partie de surface (25) dudit milieu réfractif (15) est prévue sur son côté extérieur (20).

3. Appareil électrique domestique selon la revendication 2, dans lequel ledit milieu réfractif (15) est un corps concave par rapport à ladite source lumineuse (18).

4. Appareil électrique domestique selon l'une quelconque des revendications précédentes dans lequel ladite partie de surface (25) dudit milieu réfractif (15) est contenue de façon symétrique des deux côtés par deux bandes longitudinales (22, 23), les bandes longitudinales les plus externes (22) présentant une réflectivité supérieure par rapport à des bandes longitudinales intermédiaires (23) adjacente à ladite partie de surface réfractif (25).

5. Appareil électrique domestique selon la revendication 4, dans lequel ledit milieu réfractif (15) présente une surface interne lisse (21) qui est adjacente à ladite paroi (14).

6. Appareil électrique domestique selon la revendication 5, dans lequel ledit milieu réfractif (15) constitue un écran total pour ladite source lumineuse (18) selon des directions situées à l'intérieur dudit récipient (12).

7. Appareil électrique domestique selon la revendication 6, dans lequel ledit milieu réfractif (15) s'étend longitudinalement afin de recouvrir verticalement une partie de paroi transparente (16) située immédiatement devant l'axe longitudinal de ladite anse (14).

8. Appareil électrique domestique selon l'une quelconque des revendications précédentes, dans lequel ladite paroi périphérique transparente (14) est de préférence réalisée en verre ou un matériau polymère résistant à la chaleur.

9. Appareil électrique domestique selon l'une quelconque des revendications précédentes dans lequel une deuxième source lumineuse (26) est prévue sur une partie inférieure dudit premier récipient (12), située derrière un écran (27) translucide partiellement périphérique.

10. Appareil électrique domestique selon l'une quelconque des revendications précédentes dans lequel ledit récipient est adapté pour recevoir au moins un deuxième récipient (13) introduit par le haut afin de réaliser des infusions de feuilles de plantes dans celui-ci.
